(19) **Europäisches Patentamt**

**European Patent Office**

**Office européen des brevets**

(11) **EP 1 233 527 A1**

(12) **EUROPÄISCHE PATENTANMELDUNG**

(43) Veröffentlichungstag:
**21.08.2002 Patentblatt 2002/34**

(51) Int Cl.[7]: **H04B 1/40**

(21) Anmeldenummer: **01103913.8**

(22) Anmeldetag: **17.02.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ASTRIUM GMBH**
**88039 FRIEDRICHSHAFEN (DE)**

(72) Erfinder: **Braubach, Harald**
**88697 Bermatingen (DE)**

(74) Vertreter: **Meel, Thomas**
**Patentassessor,**
**c/o Dornier GmbH**
**L H G**
**88039 Friedrichshafen (DE)**

(54) **Sende/Empfangssystem einer aktiven Antenne**

(57) Die Erfindung betrifft ein Sende/Empfangssystem einer aktiven Antenne, welches eine Vielzahl von Sende/Empfangseinheiten umfassend einen Empfangskanal und einen Sendekanal umfasst, wobei ein Verteilernetzwerk zur Verteilung eines Signals eines zentralen Oszillators auf die Sende/Empfangseinheiten vorhanden ist. Gemäß der Erfindung ist in jeder Sende/Empfangseinheit 1 der aktiven Antenne mindestens ein lokaler Oszillator 17 vorhanden, der auf eine gemeinsame Referenzfrequenz gerastet ist.

**Fig. 3**

**Beschreibung**

Die Erfindung betrifft ein Sende/Empfangssystem einer aktiven Antenne, gemäß dem Oberbegriff von Patentanspruch 1.

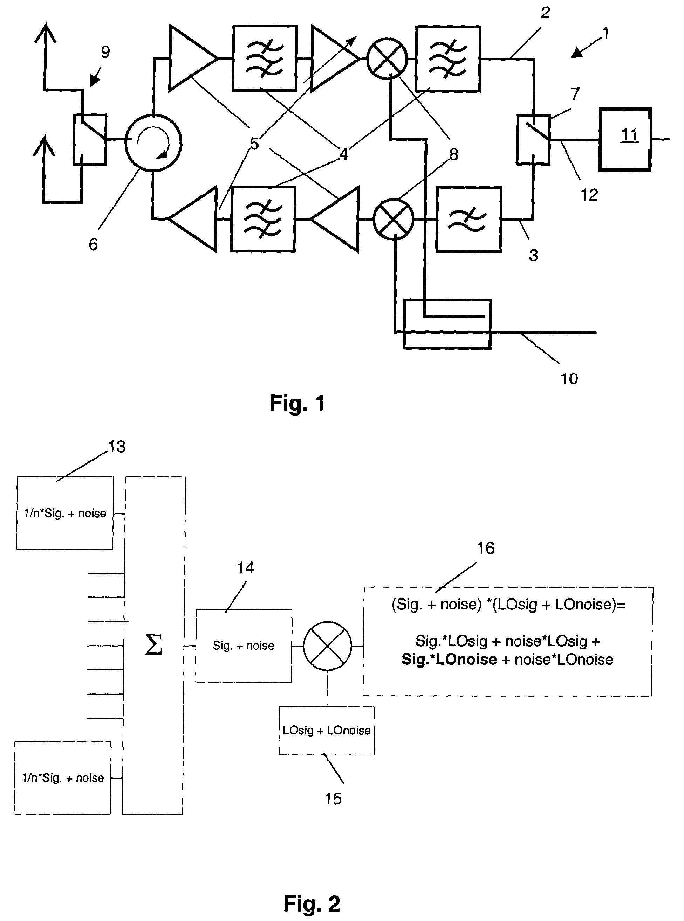

In aktiven Antennen, z.B. Phased-Array-Antennen, werden üblicherweise eine Vielzahl von Sende/Empfangseinheiten, sogenannte Transmit/Recieve-Module (T/R-Module) verwendet. In Fig. 1 ist ein T/R-Modul gemäß dem Stand der Technik dargestellt. Ein T/R-Modul 1 umfasst dabei einen Sendezweig 3 und einen Empfangszweig 2, welche antennenseitig am strahlenden Element 9 üblicherweise über einen Zirkulator 6 und geräteseitig über einen Umschalter 7 zu einem gemeinsamen Zweig verbunden sind. Zur Bearbeitung der Signale in den jeweiligen Zweigen sind Verstärkerstufen 5, Filterstufen 4 und Mischstufen 8 vorhanden. Eine eventuell geforderte Polarisationsumschaltung (nicht dargestellt) erfolgt ebenfalls über einen Umschalter. Ein Phasenschieber 11 ist im geräteseitigen gemeinsamen Zweig 12 geschaltet, es ist aber auch möglich dass ein separater Phasenschieber in den Sende- und/oder Empfangszweig 3, 2 geschaltet ist.

Das Oszillatorsignal, das für die Bearbeitung des von der aktiven Antenne empfangenen oder zu sendenden Signals benötigt wird, wird mittels eines Verteilernetzwerks 10 von einem zentralen Oszillator (nicht dargestellt) auf die einzelnen T/R-Module 1 verteilt, wodurch an allen T/R-Modulen 1 ein kohärentes Oszillatorsignal anliegt. Das Verteilernetzwerk 10 ist dabei auf die, im GHz-Bereich liegende Ausgangsfrequenz des Oszillators ausgelegt. Dies führt zu großen Verlusten und zu einer großen Phasenempfindlichkeit des Verteilernetzwerks. Um somit im Verteilernetzwerk ein Signal an alle angeschlossenen T/R-Module mit gleicher Amplitude und gleicher Phase zu übertragen, werden hohe Anforderungen an das Verteilernetzwerk gestellt. Dadurch wird der Aufbau eines üblichen Verteilernetzwerks sehr kostenintensiv. Die an den T/R-Modulen anliegenden Signale (Oszillatorsignal mit Phasenrauschen) sind aufgrund der beschriebenen Verteilung im Verteilernetzwerk zueinander kohärent.

Ein weiteres Problem dieser Schaltungsanordnung ist, dass sich durch die Summenbildung der Signale 13 der einzelnen T/R-Module das kohärente Phasenrauschen des Oszillators konstruktiv addiert (Fig. 2). Aus der Mischung des Gesamtsignals 14 der T/R-Module mit dem Oszillatorsignal 15 ergibt sich ein Gesamtsignal 16 des Sende/Empfangssystems der Form

$$Sig*LOsig + Sig*LOnoise + noise*LOsig + noise*LOnoise.$$

Dabei ist Sig das in den T/R-Modulen zu bearbeitende Signal, LOsig das Signal des Oszillators, LOnoise das Phasenrauschen des Oszillators und noise das thermische Rauschen, hervorgerufen durch die elektrischen Bauteile.

Da das thermische Rauschen sehr gering ist, können der 3. und 4. Summand in der obigen Form vernachlässigt werden. Somit geht aufgrund des 2. Summanden ein Signalanteil in das Gesamtsignal 16 ein, der das gesamte Phasenrauschen des Oszillators enthält. Dadurch wird die Qualität des Gesamtsignals 16 deutlich verschlechtert. Eine Reduzierung des Phasenrauschens des Oszillators, was gleichzeitig die Dynamik des Empfangssystems und die Qualität des Sendesignals verbessert, ist mit großem Aufwand und hohen Produktionskosten verbunden.

Aufgabe der Erfindung ist es, ein gattungsgemäßes Sende/Empfangssystem mit einer verbesserten Signalqualität bei Einsatz von kostengünstigen Bauteilen zu schaffen.

Die Aufgabe wird mit dem Sende/Empfangssystem nach Patentanspruch 1 gelöst. Vorteilhafte Ausführungen der Erfindung sind Gegenstand von Unteransprüchen.

Erfindungsgemäß ist in jeder Sende/Empfangseinheit des Sende/Empfangssystems der aktiven Antenne mindestens ein lokaler Oszillator vorhanden, der auf eine gemeinsame Referenzfrequenz gerastet ist. Diese Oszillatoren werden auch als Phase-Locked-Oszillatoren (PLO) bezeichnet. Die zentrale Referenzfrequenz liegt vorteilhaft zwischen 5 und 500 MHz. Der Vorteil ist, dass in dem erfindungsgemäßen Sende/Empfangssystem die lokalen Oszillatoren in den einzelnen T/R-Modulen nur innerhalb der Schleifenfilterbandbreite, also der Bandbreite der Phasenregelschleife, dem Referenzsignal folgen. Somit sind die lokalen Oszillatoren der einzelnen T/R-Module innerhalb der Schleifenfilterbandbreite kohärent zueinander, wohingegen sie außerhalb der Schleifenfilterbandbreite inkohärent sind. Aufgrund der hohen Stabilität des Referenzsignals ist es ferner möglich, dass diese Schleifenfilterbandbreite sehr eng (wenige kHz) eingestellt werden kann. Dies bedeutet, dass der kohärente Anteil des Phasenrauschens nur einen geringen Anteil am gesamten Phasenrauschens hat.

Bei der Bildung des Gesamtsignals durch Aufsummierung der Signale aller T/R-Module addieren sich somit die Signale innerhalb der Schleifenfilterbandbreite konstruktiv. Außerhalb der Schleifenfilterbandbreite, im Bereich des Phasenrauschens der lokalen Oszillatoren, addieren sich die Signale allerdings destruktiv, wodurch lediglich der Mittelwert des Phasenrauschens der lokalen Oszillatoren in das Gesamtsignal eingeht.

Somit kann trotz eines höheren Phasenrauschens der lokalen Oszillatoren gegenüber dem geringen Phasenrauschen des zentralen Oszillators gemäß dem Stand der Technik eine verbesserte Signalqualität erreicht werden.

In einer vorteilhaften Ausführung des erfindungsgemäßen Sende/Empfangssystems ist der lokale Oszillator einer Sende/Empfangseinheit mit der Mischstufe der entsprechenden Sende/Empfangseinheit verbunden. Durch die erfindungsgemäße Anordnung eines lokalen Oszillators in jedes T/R-Modul wird ein Verteilernetzwerk für ein zentrales Oszillatorsignal nicht benötigt. Der lokale Oszillator kann somit direkt mit der Mischstufe in der Sende/Empfangseinheit verbunden werden. Dadurch werden auftretende Verluste zwischen Oszillator und Mischstufe verringert. Außerdem ist die Verteilung des Referenzsignals für die PLOs mit geringeren Verlusten behaftet, da die Verteilung auf einer geringeren Frequenz erfolgt. Des weiteren kann das Verteilernetzwerk in einer wesentlich kostengünstigeren Technologie gefertigt werden.

Ein weiterer Vorteil, der sich aus der erfindungsgemäßen Dezentralisierung der lokalen Oszillatoren ergibt ist, dass mit einer steigenden Zahl an Sende/Empfangseinheiten in einer aktiven Antenne auch ein höheres Phasenrauschen der einzelnen PLOs möglich ist, ohne dass die Signalqualität beeinträchtigt wird. Der Grund ist, dass in das Gesamtsignal lediglich der Mittelwert des Phasenrauschens der lokalen Oszillatoren eingeht.

Die erhöhte Redundanz ist ein weiterer Vorteil der erfindungsgemäßen Schaltungsanordnung. Aufgrund der erfindungsgemäßen Dezentralisierung der Oszillatoren beeinträchtigt der Ausfall eines Oszillators nicht das gesamte System, sondern lediglich eine Sende/Empfangseinheit.

In einer weiteren vorteilhaften Ausführung ist in der Sende/Empfangseinheit ein Phasenschieber in den Signalzweig des lokalen Oszillators geschaltet. Der Phasenschieber kann dabei entweder im Signalzweig vor oder nach den lokalen Oszillator geschaltet werden. Der Vorteil dieser Verschaltung ist, dass kostengünstigere Phasenschieber eingesetzt werden können, da die Phasenschieber in dieser Verschaltung im Gegensatz zum Stand der Technik lediglich ein monofrequentes Signal verarbeiten müssen. Außerdem werden somit Verluste zwischen dem lokalen Oszillator und der Mischstufe im T/R-Modul verringert.

Die Erfindung wird im folgenden anhand von Zeichnungen näher erläutert. Es zeigen:

Fig. 1    einen Schaltungsaufbau eines T/R-Moduls in einem Sende/Empfangssystem gemäß dem Stand der Technik,

Fig. 2    Berechnungsschema des Gesamtsignals eines Sende/Empfangssystems aus einer Vielzahl von T/R-Modulen mit einem zentralen Oszillator nach dem Stand der Technik,

Fig. 3    einen Schaltungsaufbau eines T/R-Moduls in einem erfindungsgemäßen Sende/Empfangssystem mit lokalem Oszillator,

Fig. 4    Berechnungsschema des Gesamtsignals eines erfindungsgemäßen Sende/Empfangssystems aus einer Vielzahl von T/R-Modulen mit dezentralisierten lokalen Oszillatoren.

Fig. 1 zeigt den Schaltungsaufbau eines T/R-Moduls in einem Sende/Empfangssystem gemäß dem Stand der Technik. Dabei ist der Einfachheit halber lediglich ein T/R-Modul 1 dargestellt. Innerhalb einer nicht dargestellten aktiven Antenne, z.B. Phased-Array-Antenne, sind, wie in der Beschreibungseinleitung bereits beschrieben, alle T/R-Module 1 über ein Verteilernetzwerk 10 miteinander verbunden. Über die in dem Sendezweig 3 und dem Empfangszweig 2 verschalteten Mischstufen 8 wird das Oszillatorsignal des zentralen Oszillators (nicht dargestellt) in das T/R-Modul 1 eingespeist.

In Fig. 2 ist das Berechnungsschema, nach dem sich das Gesamtsignal 16 aus den Signalen 13 einer Anzahl von T/R-Modulen gemäß dem Schaltungsaufbau mit einem zentralen Oszillator nach dem Stand der Technik berechnet, dargestellt. Jedes der n vorhandenen T/R-Module verarbeitet 1/n*Sig des zu bearbeitenden Signals Sig, wobei jedes T/R-Modul ein thermisches Rauschen noise aufweist. Daraus ergibt sich für jedes T/R-Modul ein Signal 13 gemäß der Vorschrift

$$1/n*Sig + noise.$$

Mittels des Verteilernetzwerks wird das Oszillatorsignal 15 des zentralen Oszillators auf die einzelnen T/R-Module verteilt. Das Oszillatorsignal 15 setzt sich dabei aus dem Ausgangssignal LOsig des zentralen Oszillators und dem Phasenrauschen LOnoise zusammen. Dieses Oszillatorsignal 15 ist in allen T/R-Modulen kohärent. Im Berechnungsschema nach Fig. 2 muss somit zuerst die Summenbildung der Signale 13 der einzelnen T/R-Module durchgeführt werden. Anschließend erfolgt die Mischung des Summensignals 14 aller T/R-Module mit dem zentralen Oszillatorsignal 15. Das sich daraus ergebende Gesamtsignal 16 hat dann die Form

$$Sig*LOsig + noise*LOsig + Sig*LOnoise + noise*LOnoise.$$

Da das thermische Rauschen der einzelnen T/R-Module inkohärent ist, addiert sich in der Summenbildung des Signals 14 der T/R-Module das Phasenrauschen lediglich destruktiv bis zum Mittelwert des Phasenrauschens noise aller T/R-Module auf. Somit können in obiger Form des Gesamtsignals der 2. und 4. Summand vernachlässigt werden. Aufgrund des 3. Summanden geht allerdings das Phasenrauschen LOnoise des zentralen Oszillators direkt in das Gesamtsignal 16 ein.

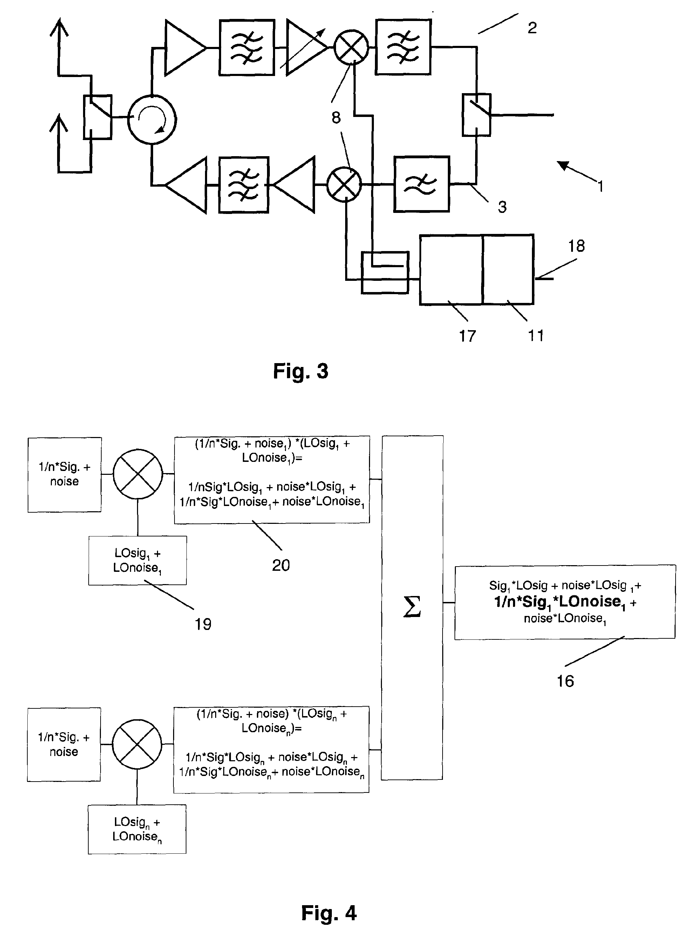

Fig. 3 zeigt einen erfindungsgemäßen Schaltungsaufbau, wobei jedes T/R-Modul einen lokalen Oszillator 17 aufweist. Der Einfachheit halber ist auch hier lediglich ein T/R-Modul 1 dargestellt. Die lokalen Oszillatoren 17 der einzelnen T/R-Module 1 sind über eine Referenzquelle (nicht dargestellt) auf eine gemeinsame Referenzfrequenz gerastet. Der lokale Oszillator 1 ist mit der Mischstufe 8 im Sende- und Empfangszweig 3, 2 des T/R-Moduls 1 verbunden. Der Phasenschieber 11 ist im Oszillatorzweig 18 vor den lokalen Oszillator 17 geschaltet. Es ist aber auch möglich, den Phasenschieber 11 dem lokalen Oszillator 17 nachzuschalten.

Fig. 4 zeigt das Berechnungsschema, nach dem sich das Gesamtsignal 16 in dem erfindungsgemäßen Sende/Empfangssystem mit dezentralen lokalen Oszillatoren berechnet. Jedes der n vorhanden, mit einem thermischen Rauschen noise behafteten T/R-Module verarbeitet 1/n*Sig des zu bearbeitenden Signals Sig. Da die Signale 19 der lokalen Oszillatoren in den einzelnen T/R-Module inkohärent zueinander sind, müssen die jeweiligen Signale 19 der lokalen Oszillatoren in jedem einzelnen T/R-Modul separat berücksichtigt werden. Somit berechnet sich das Signal 20 eines T/R-Moduls gemäß der Vorschrift

$$1/n*Sig*LOsig_n + noise*LOsig_n + 1/n*Sig*LOnoise_n + noise*LOnoise_n.$$

Durch Aufsummierung aller Einzelsignale 20 der n T/R-Module ergibt sich das Gesamtsignal 16 in der Form

$$Sig*LOsig + noise*LOsig + 1/n*Sig*LOnoise + noise*LOnoise.$$

Wie oben bereits beschrieben, ist das thermische Rauschen der einzelnen T/R-Module inkohärent. Somit ist im Gesamtsignal 16 noise der Mittelwert des Phasenrauschens aller T/R-Module. Außerdem ist das Phasenrauschen $LOnoise_n$ der einzelnen lokalen Oszillatoren inkohärent, was im Gesamtsignal 16 dazu führt, dass sich auch hier lediglich der Mittelwert des Phasenrauschens LOnoise aller lokaler Oszillatoren aufsummiert. Im Gesamtsignal 16 der obigen Form können somit der 2. und 4. Summand vernachlässigt werden. Außerdem geht der Mittelwert des Phasenrauschen LOnoise der lokalen Oszillatoren nur in 1/n des zu bearbeitenden Signals ein (3. Summand).

Daraus ergibt sich ein weiterer Vorteil des erfindungsgemäßen Sende/Empfangssystems, dass mit steigender Zahl der T/R-Module innerhalb einer Antenne der Einfluss des Phasenrauschens der lokalen Oszillatoren immer geringer wird.

**Patentansprüche**

1. Sende/Empfangssystem einer aktiven Antenne, welches eine Vielzahl von Sende/Empfangseinheiten umfassend einen Empfangskanal und einen Sendekanal umfasst, wobei ein Verteilernetzwerk zur Verteilung eines Signals eines zentralen Oszillators auf die Sende/Empfangseinheiten vorhanden ist, **dadurch gekennzeichnet, dass** in jeder Sende/Empfangseinheit (1) der aktiven Antenne mindestens ein lokaler Oszillator (17) vorhanden ist, der auf eine gemeinsame Referenzfrequenz gerastet ist.

2. System nach Anspruch 1, **dadurch gekennzeichnet, dass** der lokale Oszillator mit der Mischstufe (8) im Sendekanal (3) und/oder Empfangskanal (2) der Sende/Empfangseinheit (1) verbunden ist.

3. System nach einem der vorangehenden Ansprüche, **dadurch gekennzeichnet, dass** die zentrale Referenzfrequenz zwischen 5 und 500 MHz beträgt.

4. System nach einem der vorangehenden Ansprüche, **dadurch gekennzeichnet, dass** in der Sende/Empfangseinheit ein Phasenschieber (11) in den Signalzweig (18) des lokalen Oszillators (17) geschaltet ist.

**Fig. 1**

**Fig. 2**

**Fig. 3**

**Fig. 4**

## EUROPÄISCHER RECHERCHENBERICHT

**Europäisches Patentamt**

Nummer der Anmeldung

EP 01 10 3913

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 359 238 A (NIPPON ELECTRIC CO) 21. März 1990 (1990-03-21) <br> * Zusammenfassung * <br> * Spalte 2, Zeile 5 - Spalte 3, Zeile 39 * <br> * Spalte 8, Zeile 30 - Zeile 42 * <br> * Spalte 9, Zeile 8 - Zeile 17 * <br> * Spalte 12, Zeile 29 - Zeile 52 * <br> * Abbildung 4 * <br> * Abbildung 10 * <br> * Abbildung 12 * <br> ----- | 1-4 | H04B1/40 |

**RECHERCHIERTE SACHGEBIETE (Int.Cl.7)**

H04B
H01Q
G01S

Der vorliegende Recherchenbericht wurde für alle Patentansprüche erstellt

| Recherchenort | Abschlußdatum der Recherche | Prüfer |
|---|---|---|
| DEN HAAG | 10. August 2001 | Lindhardt, U |

**ANHANG ZUM EUROPÄISCHEN RECHERCHENBERICHT
ÜBER DIE EUROPÄISCHE PATENTANMELDUNG NR.**

EP 01 10 3913

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-08-2001

| Im Recherchenbericht angeführtes Patentdokument | Datum der Veröffentlichung | Mitglied(er) der Patentfamilie | Datum der Veröffentlichung |
|---|---|---|---|
| EP 0359238 A | 21-03-1990 | JP 2078301 A<br>JP 2095002 A<br>AU 633270 B<br>AU 4142189 A | 19-03-1990<br>05-04-1990<br>28-01-1993<br>22-03-1990 |

EPO FORM P0461

Für nähere Einzelheiten zu diesem Anhang : siehe Amtsblatt des Europäischen Patentamts, Nr. 12/82